# EUROPÄISCHE PATENTANMELDUNG

(11) **EP 0 825 703 A2**
(43) Veröffentlichungstag der Anmeldung: **25.02.1998**
(21) Anmeldenummer: 97114173.4
(22) Anmeldetag: 18.08.1997
(51) Int. Cl.: H02K 1/00, H02K 11/04

(54) **Elektromotor**

(30) Priorität: 23.08.1996 DE 19634097
(71) Anmelder: Leopold Kostal GmbH & Co. KG, 58507 Lüdenscheid (DE)
(72) Erfinder: Bergman, Eduard, 58515 Lüdenscheid (DE)

(57) **Zusammenfassung**

Es wird ein Elektromotor vorgeschlagen, welcher sich im wesentlichen aus einem mehrteiligen Gehäuse sowie seinem Gehäuse zugeordneten Frequenzumrichter zusammensetzt. Zu dem Zweck eine kompakt aufgebaute aus einem Elektromotor und einem Frequenzumrichter bestehende Einheit zu schaffen, welche in einem gemeinsamen, auch den Frequenzumrichter im rauhen Alltagsbetrieb zuverlässig gegen Beschädigungen schützenden Gehäuse untergebracht ist, erfolgt die Unterbringung des Frequenzumrichters im Innenraum eines lediglich von der Motorwelle des Elektromotors durchdrungenen Gehäuseabschnittes.

## Beschreibung

Die vorliegende Erfindung geht von einem entsprechend dem Oberbegriff des Hauptanspruches konzipierten Frequenzumrichter gespeisten Elektromotor aus.

Eine Vielzahl derartiger mit einem Frequenzumrichter ausgerüsteter Elektromotore sind bereits bekanntgeworden. Mittels des Frequenzumrichters wird eine Steuerung oder Regelung des von einen Drehstrommotor angetriebenen Aggregates durchgeführt. Bei derart angetriebenen Aggregaten handelt es sich z.B. um Gebläse, Pumpen, Verdichter usw. Zur Regelung oder Steuerung wird zum einen die Drehzahl des antreibenden Elektromotors z.B. über ein erstes Sensorelement erfaßt, oftmals werden zum anderen außerdem zusätzlich Betriebskennwerte der angetriebenen Aggregate wie z.B. Volumenstrom, Druckdifferenz usw. mittels eines zweiten Sensorelementes aufgenommen. Ein solcher Frequenzumrichter nimmt jedoch nicht nur an und für sich einen beachtlichen Bauraum ein, sondern es bestehen bei beengten Einbauverhältnissen wegen seines kastenförmigen, außen am Gehäuse des Elektromotors aufgesetzten Anbaues oftmals erhebliche Schwierigkeiten einen geeigneten Unterbringungsort für einen solchen Elektromotor zu finden. Wegen der außenliegenden Anbauverhältnisse ist der Frequenzumrichter darüber hinaus im rauhen Alltagsbetrieb oftmals nicht hinreichend gegen Beschädigung geschützt und desweiteren kann sich bei starker Belastung eine übermäßige Erhitzung des Frequenzumrichters ergeben, kann dieser nicht ausreichend mit Kühlluft versorgt werden.

Durch das DE 93 05 174.3 U1 ist ein dem Oberbegriff des Hauptanspruches entsprechender Elektromotor bekanntgeworden, dessen Gehäuse auch den Frequenzumrichter aufnimmt. Der Frequenzumrichter ist dabei im Innenraum in demjenigen Gehäuseabschnitt angeordnet, in welchem die Motorwelle zumindest hineinragt und welcher benachbart dem Lüfter zugeordnet ist. Eine solche Anordnung trägt maßgeblich zur Kühlung des Frequenzumrichters bei. Die vom Motor abgestrahlte Wärme wirkt jedoch direkt auf den Frequenzumrichter ein, was andererseits einer wirkungsvollen Kühlung entgegensteht.

Der vorliegenden Erfindung liegt deshalb die Aufgabe zugrunde, eine kompakt aufgebaute aus einem Elektromotor und einem Frequenzumrichter bestehende Einheit zu schaffen, welche in einem gemeinsamen, auch den Frequenzumrichter im rauhen Alltagsbetrieb zuverlässig gegen Beschädigungen schützenden Gehäuse untergebracht ist und bei dem der Frequenzumrichter gleichzeitig gegen die vom Elektromotor ausgehende Wärmestrahlung wirkungsvoll abgeschirmt ist.

Erfindungsgemäß wird die Aufgabe durch die im kennzeichnenden Teil des Hauptanspruches angegebenen Merkmale gelöst.

Vorteilhaft bei einer derartigen Ausgestaltung eines Elektromotors mit Frequenzumrichter ist, daß dem Frequenzumrichter durch den generell vorhanden Motorlüfter immer ausreichend Kühlluft zugeführt wird. Dies ist insbesondere dann der Fall, wird der Frequenzumrichter dem der B-Seite des Elektromotors zugehörigen Gehäuseabschnitt zugeordnet.

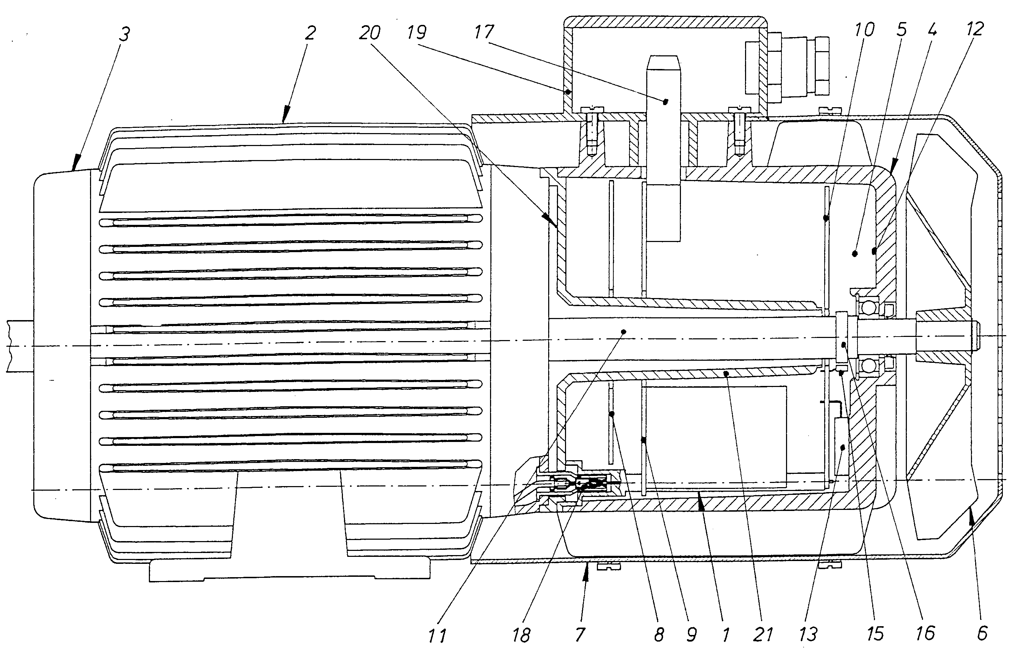

Weitere vorteilhafte Ausgestaltungen des erfindungsgemäßen Gegenstandes sind in den Unteransprüchen angegeben und werden anhand eines in der Zeichnung dargestellten Ausführungsbeispiels näher erläutert.

Wie aus der Zeichnung hervorgeht, besteht der Elektromotor im wesentlichen aus einem dreiteiligen Gehäuse sowie einem seinem Gehäuse zugeordneten Frequenzumrichter 1, wobei sich das Gehäuse grundsätzlich aus einem die nicht näher dargestellten Komponenten des Elektromotors aufnehmenden Gehäuseteil 2 und diesem beiderseits zugeordneten Gehäuseabschnitten 3, 4 zusammensetzt.

Wie desweiteren aus der Zeichnung hervorgeht, ist der Frequenzumrichter 1 im Innenraum 5 des Gehäuses angeordnet. Dabei ist er im Gehäuseabschnitt 4 festgelegt, welcher der B-Seite des Elektromotors zugeordnet und gleichzeitig als Lagerschale ausgebildet ist. Auch der der A-Seite des Elektromotors zugeordnete Gehäuseabschnitt 3 ist als Lagerschale ausgebildet. Aus dem der A-Seite des Elektromotors zugeordneten Gehäuseabschnitt 3 ist der Teil der Motorwelle 11 nach außen geführt, der für den Anschluß eines Aggregates vorgesehen ist. Wie allgemein üblich, trägt die sog. B-Seite des Elektromotors den zur Kühllufterzeugung notwendigen Motorlüfter 6. Der Motorlüfter 6 erzeugt somit eine Kühlluftströmung, die zuerst die Außenfläche des ihm zugeordneten Gehäuseabschnittes 4, dann die Außenfläche des die Motorkomponenten umgebenden Gehäuseteiles 2 und zuletzt den der A-Seite des Elektromotors zugeordneten Gehäuseabschnitt 3 überstreicht. Der der B-Seite des Elektromotors zugeordnete Gehäuseabschnitt 4 ist zusätzlich mit einer Abdeckung 7 ummantelt, die auch den Motorlüfter 6 umgibt. Weil die Abdeckung 7 den Gehäuseabschnitt 4 mit Abstand umgibt, wird eine derart gezielt gerichtete, von der Motorwärme völlig unbelastete Kühlluftströmung erzeugt, die eine besonders intensive Kühlung des Gehäuseabschnittes 4 und somit des im Innenraum 5 angeordneten Frequenzumrichters 1 hervorruft. Somit ist auf besondere einfache Art und Weise ein gemeinsames, sowohl den Elektromotor als auch den Frequenzumrichter 1 aufnehmendes Gehäuse entstanden, welches bei hoher Schutzwirkung gegen von außen auftretende Beschädigungen gleichzeitig für eine effektive Kühlung des Frequenzumrichters 1 Sorge trägt. Der Schutz vor Beschädigungen ist deshalb außerordentlich wirkungsvoll, weil der an und für sich massiv ausgeführte Gehäuseabschnitt 4 den Frequenzumrichters 1, quasi als Weiterführung des Gehäuseteiles 2, direkt umgibt und der Gehäuseabschnitt 4 wiederum mit der Abdeckung 7 ummantelt ist. Das Gesamtgebilde (Elektromotor und Frequenzumrichter) ist also in einem äußerst kompakten Gehäuse untergebracht.

Um die Komponenten des Frequenzumrichters 1 besonders gut vor der durch den Elektromotor erzeugten Wärmestrahlung abzuschotten, ist an der Trennstelle zwischen dem Gehäuseteil 2 und dem Gehäuseabschnitt 4 ein Wärmeschutzschild 20 angeordnet. Das Wärmschutzschild 20 besteht aus einem wärmestabilen Kunststoff und ist am Gehäuseabschnitt 4 festgelegt. Die beiden Hauptflächen des Wärmschutzschildes 20 sind dabei quer zur Erstreckungsrichtung der Motorwelle 11 sowie des Stators angeordnet und in ihrem Zentrum von der Motorwelle 11 durchdrungen. Um die Montage des aus mehreren Komponenten bestehenden Frequenzumrichters 1 zu erleichtern, und dabei insbesondere seine empfindlichen Komponenten wie z.B. die mit elektrischen Leiterbahnen versehenen Trägerplatten 8, 9, 10 vor Beschädigungen zu schützen, ist an das Wärmeschutzschild 20 ein Fortsatz 21 angeformt. Ausgehend von der Durchdringungsöffnung der beiden Hauptflächen erstreckt sich der Fortsatz 21 des Wärmeschutzschildes 20 trichterartig verjüngt in Richtung auf den Motorlüfter 6. Der Öffnungsquerschnitt des Fortsatzes 21 ist jedoch mindestens so groß, daß die Motorwelle 11 mit ihrem Ring 16 bei der Montage diesen problemlos passieren kann. Die hinter dem Wärmeschutzschild 20 liegenden Komponenten des Frequenzumrichters 1 werden somit wirkungsvoll gegen die Wärmestrahlung des Elektromotors in Art einer Wärmefalle abgeschottet.

Die mit den elektrischen Leiterbahnen versehenen Trägerplatten 8, 9, 10 sind ebenfalls quer zur Längsrichtung der Motorwelle 11 angeordnet und werden ebenfalls von dieser durchdrungen. Die erste Trägerplatte 8 und die zweite Trägerplatte 9 sind in der Nähe der beiden Hauptflächen des Wärmeschutzschildes 20 angeordnet, wohingegen die dritte Trägerplatte 10 ist mit einer ihrer beiden Hauptflächen nahe des Motorlüfters 6, im geringen Abstand parallel zur stirnseitigen Innenwandung 12 des betreffenden Gehäuseabschnittes 4 verlaufend angeordnet ist. Die zur Beeinflussung des Elektromotors notwendigen ebenfalls zum Umfang des Frequenzumrichters 1 zählenden Leistungsschaltelemente 13 sind zur besseren Kühlung so auf der dritten Trägerplatte 10 angeordnet, daß diese mit ihren der Trägerplatte 10 abgewandten Außenflächen unter Zwischenschaltung einer Wärmeleitpaste an der stirnseitigen Innenwandung 12 zur Anlage kommen. Weil die Stirnwand des Gehäuseabschnittes 4 zuallererst mit der vom Motorlüfter 6 erzeugten Kühlluftströmung beaufschlagt wird, ergibt sich an dieser Wandung auch die intensivste Kühlung.

Um die Drehzahl des Elektromotors zuverlässig erfassen zu können, ist außerdem ein Sensorelement 15 auf der dritten Trägerplatte 10 vorhanden. Das als Hallschaltbaustein ausgebildete Sensorelement 15 ist in der Nähe, der von der Motorwelle 11 durchgriffene Ausnehmung auf der dritten Trägerplatte 10 angebracht. Die Zuordnung zur Motorwelle 11 ist dabei so gewählt, daß die sensorempfindliche Fläche des Sensorelementes 15 einem auf der Motorwelle 11 angebrachten, mehrere unterschiedliche magnetische Felder aufweisenden Ring 16 direkt gegenüber liegt.

Um einen besonders kompakten Aufbau des Gesamtgebildes (Elektromotor und Frequenzumrichter) zu erzielen, sind die den Frequenzumrichter 1 bildenden Komponenten so angeordnet, daß sie die Motorwelle 11 konzentrisch umgeben. Zur besseren Montage des Gesamtgebildes sind die intern notwendigen elektrischen Verbindungen zwischen den Komponenten des Elektromotors und denen des Frequenzumrichters 1 als Steckkontakteinrichtungen 18 ausgeführt. Die zur Herstellung der internen Verbindungen dienenden Steckkontakteinrichtungen 18 sind dabei so in der Nähe der zwischen dem Gehäuseteil 2 und dem Gehäuseabschnitt 4 vorhandenen Trennstelle angeordnet, daß der Gehäuseabschnitt 4 mit dem in seinem Innenraum 5 befindlichen Frequenzumrichter 1 bei der Montage lediglich vollständig auf den Befestigungsflansch des Gehäuseteiles 2 aufgeschoben werden muß um dabei automatisch auch alle notwendigen elektrischen Verbindungen herzustellen. Als Ausgangsbasis der direkt dem Frequenzumrichter 1 zugehörigen Steckkontakteinrichtungen 18 dienen die ebenfalls zu ihm gehörigen Trägerplatten 8, 9, 10.

Auch die für die Außenverschaltung erforderlichen, aus dem Gehäuse herausgeführten elektrischen Anschlußstellen 17 sind als Steckkontakteinrichtungen ausgebildet. So kann auch die Außenverschaltung durch ein einfaches Aufstecken einer Gegensteckkontakteinrichtung zuverlässig hergestellt werden. Zum Schutz vor Beschädigungen sind die Anschlußstellen 17 mit einem kleinen Schutzkasten 19 abgedeckt.

## Patentansprüche

1. Elektromotor mit einem seinem Gehäuse zugeordneten Frequenzumrichter, wobei der Frequenzumrichter einerseits zur Beeinflussung des Elektromotors elektrisch leitend mit dessen Statorwicklung sowie andererseits mit zumindest einem die Drehzahl des Elektromotors und mit zumindest einem weiteren den Betriebszustand des an den Elektromotor angeschlossenen Aggregates erfassenden Sensorelement in Verbindung steht, wobei die zur Beeinflussung des Elektromotors notwendigen Leistungsschaltelemente auf zumindest einer dem Frequenzumrichter zugeordneten Trägerplatte angeordnet und die für die Außenverschaltung erforderlichen elektrischen Anschlußstellen aus dem Gehäuse herausgeführt sind, **dadurch gekennzeichnet**, daß der Frequenzumrichter (1) im Innenraum (5) eines lediglich von der Motorwelle (11) durchdrungenen Gehäuseabschnittes (4) des Gehäuses angeordnet ist und daß am Gehäuseabschnitt (4) nahe des Stators ein mit seinen Hauptflächen quer zur Motorwelle (11) sowie zur Statorwicklung angeordnetes, von der Motorwelle (11) durchdrungenes Wärmeschutzschild (20) angebracht ist.

2. Elektromotor nach Anspruch 1, dadurch gekennzeichnet, daß der den Frequenzumrichter (1) aufnehmende Gehäuseabschnitt (4) einer seiner beiden Lagerschalen zugeordnet ist.

3. Elektromotor nach einem der Ansprüche 1 oder 2, dadurch gekennzeichnet, daß der den Frequenzumrichter (1) aufnehmende Gehäuseabschnitt (4) der Lagerschale entspricht, welcher von dem Abschnitt der Motorwelle (11) durchdrungen ist, der auch den Motorlüfter (6) trägt, also der sog. B-Seite des Elektromotors zugeordneten ist.

4. Elektromotor nach einem der Ansprüche 1 bis 3, dadurch gekennzeichnet, daß die zum Frequenzumrichter (1) gehörigen Leistungsschaltelemente (13) mit zumindest einer ihrer Außenflächen mit einer Innenwandung (12) des diesen aufnehmenden Gehäuseabschnittes (4) in Kontakt stehen.

5. Elektromotor nach Anspruch 4, dadurch gekennzeichnet, daß zwischen der Außenfläche der Leistungsschaltelemente (13) und der betreffenden Innenwandung (12) des Gehäuseabschnittes (4) Wärmeleitpaste vorhanden ist.

6. Elektromotor nach einem der Ansprüche 1 bis 5, dadurch gekennzeichnet, daß zumindest eine der zum Frequenzumrichter (1) gehörigen Trägerplatten (8, 9, 10) mit ihren Hauptflächen quer zur Längsrichtung der Motorwelle (11) angeordnet und von dieser durchdrungen ist.

7. Elektromotor nach Anspruch 6, dadurch gekennzeichnet, daß zumindest eine der quer zur Motorwelle (11) ausgerichteten Trägerplatten (8,9,10) zumindest eines der Leistungsschaltelemente (13) trägt.

8. Elektromotor nach einem der Ansprüche 1 bis 7, dadurch gekennzeichnet, daß die Leistungsschaltelemente (13) geschützt vor der direkten Wärmestrahlung des Elektromotors auf zumindest einer der Trägerplatten (8,9,10) angeordnet sind.

9. Elektromotor nach Anspruch 8, dadurch gekennzeichnet, daß das Wärmschutzschild (20) aus einem wärmestabilen Kunststoff besteht.

10. Elektromotor nach Anspruch 8 und 9, dadurch gekennzeichnet, daß an das Wärmeschutzschild ein Fortsatz angeformt ist, der die Motorwelle (11) in geringem Abstand umgibt und sich trichterartig in Richtung Motorlüfter (6) verjüngend erstreckt.

11. Elektromotor nach einem der Ansprüche 1 bis 10, dadurch gekennzeichnet, daß auf einer der Trägerplatten (8,9,10) das zumindest eine, zur Drehzahlerfassung des Elektromotors dienende Sensorelement (15) angeordnet ist.

12. Elektromotor nach Anspruch 11, dadurch gekennzeichnet, daß das Sensorelement (15) durch magnetische Felder beeinflußbar ist.

13. Elektromotor nach einem der Ansprüche 1 bis 12, dadurch gekennzeichnet, daß die das Sensorelement (15) beeinflussenden Mittel direkt an der Motorwelle (11) angebracht sind.

14. Elektromotor nach Anspruch 13, dadurch gekennzeichnet, daß die Mittel als ein mehrere unterschiedliche magnetische Felder aufweisender Ring (16) ausgebildet sind.

15. Elektromotor nach einem der Ansprüche 1 bis 14, dadurch gekennzeichnet, daß zumindest die zwischen der Statorwicklung und dem Frequenzumrichter (1) vorhandenen elektrischen Verbindungen über Steckkontakteinrichtungen (18) hergestellt sind.

16. Elektromotor nach Anspruch 15, dadurch gekennzeichnet, daß die Steckkontakteinrichtungen (18) nahe der zwischen dem den Frequenzumrichter (1) aufnehmenden Gehäuseabschnitt (4) und dem den Stator aufnehmenden Gehäuseteil (2) vorhandenen Trennstelle angeordnet sind.

17. Elektromotor nach einem der Ansprüche 1 bis 16, dadurch gekennzeichnet, daß die aus dem Innenraum (5) des Gehäuses nach Außen geführten elektrischen Anschlußstellen (17) von einem Schutzkasten (19) abgedeckt sind, welcher zumindest ein Anzeigeelement aufweist.

18. Elektromotor nach einem der Ansprüche 1 bis 17, dadurch gekennzeichnet, daß die aus dem Innenraum (5) des Gehäuses nach Außen geführten elektrischen Anschlußstellen (17) von einem Schutzkasten (19) abgedeckt sind, welcher zumindest ein Bedienelement aufweist.

19. Elektromotor nach einem der Ansprüche 1 bis 18, dadurch gekennzeichnet, daß die aus dem Innenraum (5) des Gehäuses nach Außen geführten elektrischen Anschlußstellen (17) ebenfalls als Steckkontakteinrichtungen ausgebildet sind.

20. Elektromotor nach einem der Ansprüche 1 bis 19, dadurch gekennzeichnet, daß die den Frequenzumrichter (1) bildenden Komponenten die Motorwelle (11) konzentrisch umgeben.
